# EUROPEAN PATENT SPECIFICATION

(11) **EP 3 185 058 B1**
(45) Date of publication and mention of the grant of the patent: **10.08.2022**
(21) Application number: 15833151.2
(22) Date of filing: 13.04.2015
(51) Int. Cl.: G02B 6/38

(54) **OPTICAL FIBER CONNECTOR**
GLASFASERSTECKER
CONNECTEUR DE FIBRE OPTIQUE

(30) Priority: 20.08.2014 CN 201410413658
(43) Date of publication of application: 28.06.2017
(73) Proprietor: ZTE Corporation, Shenzhen, Guangdong 518057 (CN); China Aviation Optical-Electrical Technology Co. Ltd., Luoyang, Henan 471000 (CN)
(72) Inventor: HAO, Xiangyong, Shenzhen Guangdong 518057 (CN); GONG, Yu, Shenzhen Guangdong 518057 (CN); CUI, Manman, Shenzhen Guangdong 518057 (CN); SUN, Yalei, Shenzhen Guangdong 518057 (CN); LI, Xiaowei, Shenzhen Guangdong 518057 (CN)
(74) Representative: Ligi, Stefano
(86) International application number: PCT/CN2015/076462
(87) International publication number: WO 2016/026312

(56) References cited:
- CN-A- 102 565 946
- CN-U- 202 372 667
- CN-U- 203 149 152
- TW-U- M 387 260
- US-A1- 2007 025 665
- US-A1- 2009 148 101
- US-A1- 2009 304 335
- US-A1- 2010 209 052
- US-A1- 2014 086 534

## Description

### TECHNICAL FIELD

The disclosure relates to an optical communication technique, and more particularly, to an optical fiber connector.

### BACKGROUND

At present, in existing optical communication systems, optical fiber distribution normally adopts standard SC type connectors, as described in the standard YD/T 1272.3-2005. Although this type of standard connectors are simple in structure and smaller in size, they are only suitable for use as conventional optical fiber jumpers for equipments such as special optical fiber trays for lack of any additional protection (waterproofing, dustproofing and the like), therefore applicable scenarios are very limited, and the SC type connectors cannot be applied directly in outdoor changeable environments, and cannot be used in places, such as aerial places and the like, as well.

According to US 2009/304335 A1, a hardened fiber optic connector includes a unitary housing that mounts a connector body. The hardened fiber optic connector terminates a fiber optic cable including a strength layer and can be connected to a hardened fiber optic adapter. The unitary housing can transfer loads between the fiber optic cable and the hardened fiber optic adapter.

According to US 2010/209052 A1, a fiber optic connector assembly and method for venting gas inside in a fiber optic connector sub-assembly are described. The fiber optic connector assembly includes a connector sub-assembly including a ferrule and a ferrule holder having a passage extending therethrough. A stiffener tube having a tube body disposed about a portion of at least one optical fiber supports insertion of the optical fiber into the ferrule holder passage. The stiffener tube contains at least one opening in its tube body configured to vent gas trapped inside the stiffener tube during assembly. In this manner, the trapped gas does not form a gas pocket in the bonding agent, which could compromise bonding among the optical fiber, stiffener tube, and connector sub-assembly.

According to US 2009/148101 A1, a fiber optic connection system includes a ruggedized fiber optic adapter and a ruggedized fiber optic connector and can further include a standard fiber optic connector (e.g., an SC connector), a pre-existing ruggedized fiber optic adapter, a first converter for converting the standard fiber optic connector to be compatible with the ruggedized fiber optic adapter, a second converter for converting the ruggedized fiber optic connector to be compatible with the pre-existing ruggedized fiber optic adapter, and a standard fiber optic adapter (e.g., an SC adapter). The ruggedized fiber optic connector is compatible with the ruggedized fiber optic adapter and with the standard fiber optic adapter. To retain the various connectors within the various adapters, various retention members and features (e.g. threaded retention members and latches) can be included in the fiber optic connection system. The first converter includes a converter housing that is sized to fit over a connector body of the standard fiber optic connector and retention shoulders of the connector body engage the converter housing.

### SUMMARY

In order to solve the existing technical problem, an embodiment of the disclosure provides an optical fiber connector.

The features of the optical fiber connector according to the invention are defined in the independent claim, and the preferable features according to the present invention are defined in the dependent claims. The optical fiber connector in the embodiment of the disclosure has functions such as water proofing and dust proofing, and therefore can be applied in changeable environments such as outdoor environments.

### BRIEF DESCRIPTION OF THE DRAWINGS

In the accompanying drawings (not necessarily drawn according to a proportion), similar numbers can describe similar parts in different diagrams. The similar numbers with different letter suffixes can represent different examples of the similar parts. The accompanying drawings generally show each embodiment discussed herein with examples rather than in a limiting manner.
Fig. 1 is a structural schematic diagram of an optical fiber connector of an embodiment of the disclosure.
Fig. 2 is a cross-sectional schematic diagram of an optical fiber connector of an embodiment of the disclosure.
Fig. 3A is a structural schematic diagram of a guide protective sleeve of an embodiment of the disclosure.
Fig. 3B is a structural schematic diagram of a rear sleeve of an embodiment of the disclosure.
Fig. 3C is a schematic diagram of a groove-key structure of a guide protective sleeve of an embodiment of the disclosure.
Fig. 4 is a structural schematic diagram of a guide protective sleeve fixed with a rear sleeve of an embodiment of the disclosure.
Fig. 5 is a structural schematic diagram of two snap joints of an embodiment of the disclosure.
Fig. 6 is a whole schematic diagram of an optical fiber connector of an example not including all the claimed features of the disclosure.
Fig. 7 is an application schematic diagram of an optical fiber connector of an example not including all the claimed features of the disclosure.

### DETAILED DESCRIPTION

The disclosure will be further illustrated in detail together with the accompanying drawings and embodiments as follows.

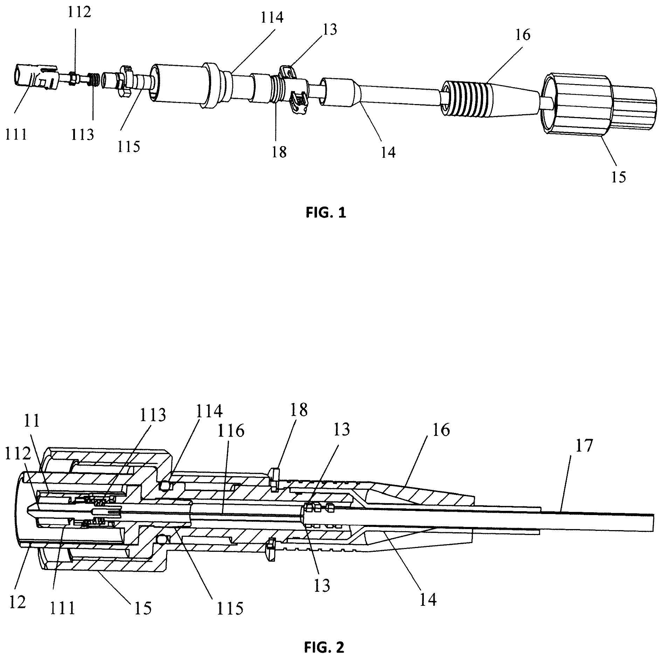

An embodiment of the disclosure provides an optical fiber connector, as shown in Fig. 1 and Fig. 2, which includes: an optical fiber body 11, a guide protective sleeve 12, at least two snap joints 13, a heat-shrinkable bush 14, a coupling nut 15 and a sheath 16, wherein
the optical fiber body 11 is arranged to splice an optical fiber;
the guide protective sleeve 12 is sleeved on the optical fiber body 11, and is arranged to guide alignment between the optical fiber body 11 and an optical fiber adaptor, and protect a pin component 112 of the optical fiber body 11 to prevent the pin component 112 from being damaged;
at least two snap joints 13 are arranged partly within the at least two through-hole openings of the guide protective sleeve 12 and partly between the guide protective sleeve 12 and an optical cable 17, and are arranged to fix the optical cable 17 connected to the optical fiber of the optical fiber body 11; the protective heat-shrinkable bush 14 wraps the at least two snap joints extends to a portion of the optical cable 17, and is arranged to protect the at least two snap joints 13 and
the optical cable 17 fixed by the at least two snap joints 13, playing the role of dustproofing, waterproofing, etc..
the coupling nut 15 is sleeved on the optical fiber body 11 connected with the guide protective sleeve 12, and is arranged to be connected to the optical fiber adaptor; and
the sheath16 is sleeved on another region of the optical fiber connector not wrapped by the coupling nut 15, and extends to a portion of the protective heat-shrinkable bush 14, playing the role of dustproofing, waterproofing, etc..

Here, the optical fiber body 11 may be an SC type optical fiber body, or may be an FC type optical fiber body, or may be a duplex optical fiber body and the like; when the optical fiber body 11 is the SC type optical fiber body, the optical fiber body 11 includes: a front sleeve 111, the pin component 112, a spring 113, an O-shaped ring 114, a rear sleeve 115 and an optical fiber 116; and when the optical fiber body 11 is other types of optical fiber bodies, the compositions of the optical fiber body 11 are contents which can be learned from common knowledge by those skilled in the art, and therefore are not repeated anymore.

The at least two snap joints 13 are arranged partly within the at least two through-hole openings of the guide protective sleeve 12 and partly between a guide protective sleeve 12 and an optical cable 17, and are arranged to fix the optical cable 17 connected to the optical fiber 116 of the optical fiber body 11.

The coupling nut 15 may be sleeved on the optical fiber body 11 through a snap ring 18 arranged on the outer wall of the optical fiber body 11; specifically, the coupling nut 15 may be sleeved on the optical fiber body 11 through the snap ring 18 arranged on an outer wall of the rear sleeve 115 of the optical fiber body 11; correspondingly, the sheath 16 may also be sleeved on another region of the optical fiber connector not wrapped by the coupling nut 15 through the snap ring 18.

The coupling nut 15 is internally provided with a thread, and is connected with the optical fiber adaptor through the internal thread.

The guide protective sleeve 12 may be made of a plastic material, such as polyetherimide (PEI), nylon and the like;
the snap joint 13 may be made of a metal material, such as stainless steel and the like;
the heat-shrinkable bush 14 may be made of a double-arm heat-shrinkable tube, and may specifically be various types of existing double-arm heat-shrinkable tubes;
the coupling nut 15 may be made of a plastic material, such as PEI, nylon and the like;
the sheath 16 may be a plastic material, such as thermoplastic polyurethane elastomer rubber (TPU) and the like;
the pin component 112 is designed in the guide protective sleeve 12, and such the design mode not only can protect the pin component 112 to prevent the pin component 112 from being damaged, but also can play a good guiding role when the optical fiber connector and the optical fiber adaptor are in butting insertion.

In a practical application, the optical cable 17 may be an optical cable with functions such as dustproofing, waterproofing and the like.

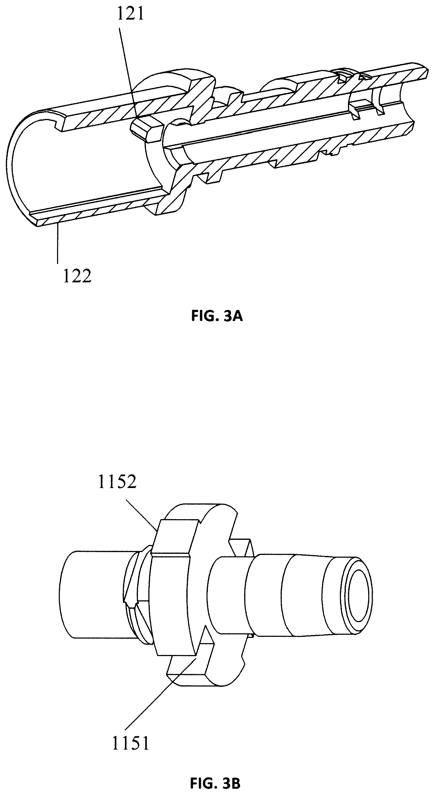

According to the claimed invention, as shown in Fig. 3A and Fig. 3B, the guide protective sleeve 12 is connected with the rear sleeve 115 of the optical fiber body 11, an inner wall of the guide protective sleeve 12 is provided with a first positioning key 121 and a first positioning groove 122, the outer wall of the rear sleeve 115 is provided with a second positioning groove 1151 and a second positioning key 1152 at corresponding positions, the guide protective sleeve 12 and the rear sleeve 115 are combined together firmly by fastening of the first positioning key 121 and the second positioning groove 1151 and fastening of the first positioning groove 122 and the second positioning key 1152, and the adopted key-groove and groove-key structure not only can play a positioning role, but also can prevent a rotation between the guide protective sleeve 12 and the rear sleeve 115.

Numbers of the first positioning key 121, the first positioning groove 122, the second positioning groove 1151 and the second positioning key 1152 can be determined as needed.

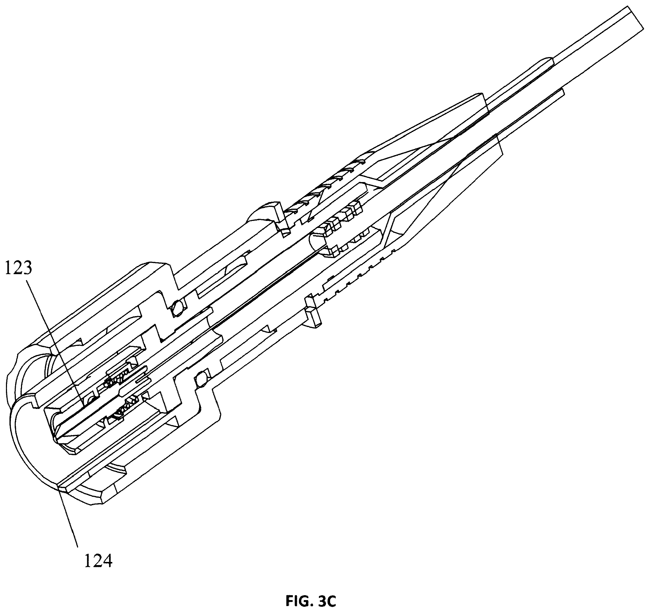

Here, in a practical application, as shown in Fig. 3C, a third positioning key 123 and a third positioning groove 124 may also be arranged on the inner wall of the guide protective sleeve 12, and by fastening of the third positioning key 123 and a positioning groove arranged on the optical fiber adaptor, and fastening of the third positioning groove 124 and a positioning key arranged on the optical fiber adaptor, the guide protective sleeve 12 and the optical fiber adaptor are combined together firmly.

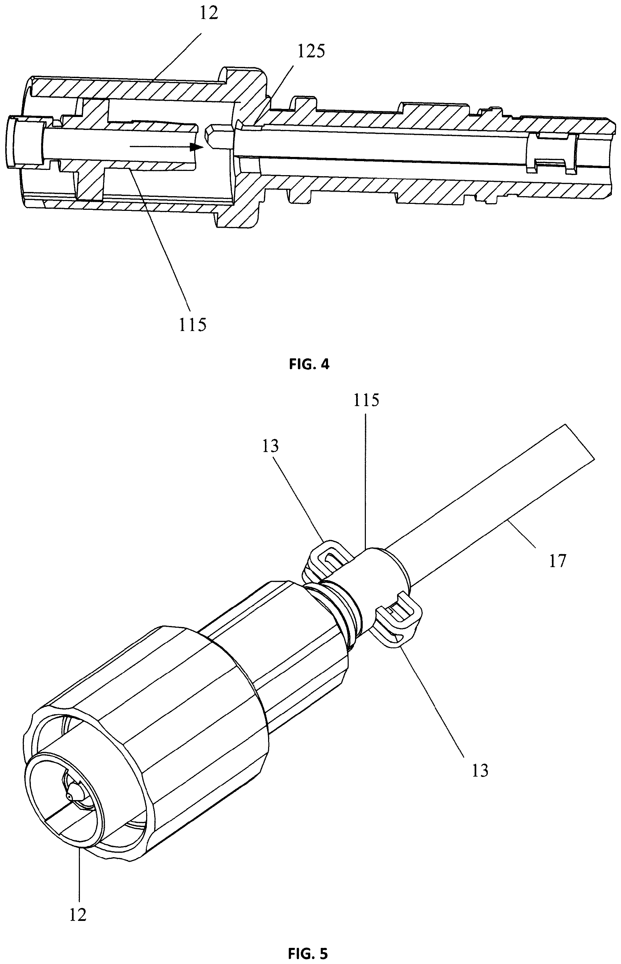

As shown in Fig. 4, a barb 125 is arranged on the inner wall of the guide protective sleeve 12, when the rear sleeve 115 is mounted forcibly in the guide protective sleeve 12, the barb 125 firmly fixes the rear sleeve 115, so that the guide protective sleeve 12 and the rear sleeve 115 are more firmly combined together. Here, a number of the barb 125 may be more than one, and the number of the barb 125 may be determined according to actual requirements.

In a practical application, a number of the snap joint 13 is more than two, and after the waterproof optical cable 17 is threaded into the guide protective sleeve 12 and is connected with the optical fiber 116, more than two snap joints 13 are used to fasten the waterproof optical cable 17; in an embodiment, as shown in Fig. 5, the number of the snap joint is two and a positional relation between the two snap joints 13 is 180 degrees, in other words, the two snap joints fasten the waterproof optical cable 17 in tandem, thus effectively guaranteeing a certain pulling effect.

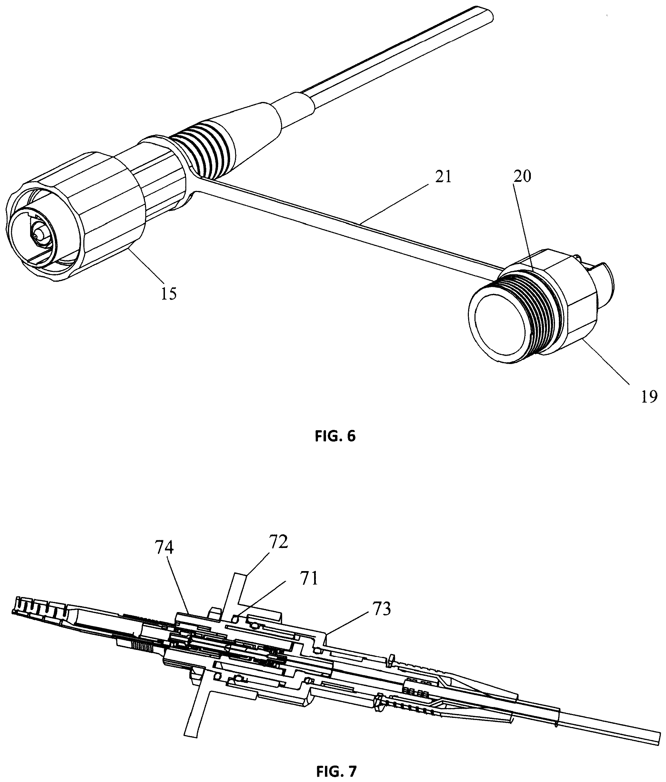

In an embodiment, as shown in Fig. 6, the optical fiber connector may also include: a dustproof cap 19 provided with a thread. When the optical fiber connector in an embodiment of the disclosure is not connected to the optical fiber adaptor, the dustproof cap 19 may be connected to the coupling nut 15 by the thread to play the role of dustproofing, waterproofing and the like; here, in order to guarantee the sealing property of the optical fiber connector, as shown in Fig. 6, a sealing ring 20 may also be added between the dustproof cap 19 and the coupling nut 15; in addition, the dustproof cap 19 may also be connected to the coupling nut 15 by a connecting part 21, thus, the dustproof cap 19 can be prevented from being lost, and moreover, use becomes convenient. In a practical application, as shown in Fig. 6, an end, which is connected with the coupling nut 15, of the connecting part 21 may be arranged at the snap ring, and an end, which is connected with the dustproof cap 19, of the connecting part 21 is arranged at a position adjoining the sealing ring 20.

The dustproof cap 19 may be made of a plastic material, such as PEI, nylon and the like; the sealing ring 20 may be made of various silica gel, mastic gum or the like; and the connecting part 21 may be made of a plastic material, such as nylon and the like.

In a practical application, as shown in Fig. 7, an O-shaped ring 71 may be mounted in a groove of a mounting panel 72, an optical fiber connector 73 in an embodiment of the disclosure is butted with an optical fiber adaptor 74 by means of the guiding function of the guide protective sleeve, the coupling nut is fixed on the optical fiber adaptor through the thread, and thereby mounting is complete. The optical fiber connector in the embodiment of the disclosure has functions such as waterproofing and dustproofing, and therefore can be applied in changeable environments (for example, aerial environments, etc.) such as outdoor environments.

In addition, since the guide protective sleeve and the rear sleeve are combined together by adopting the key-groove and groove-key structure, the key-groove and groove-key structure not only can effectively play the positioning role, but also can effectively prevent the rotation between the guide protective sleeve and the rear sleeve.

When the rear sleeve is forcibly mounted in the guide protective sleeve, the barb arranged on the inner wall of the guide protective sleeve firmly fixes the rear sleeve, and thus the guide protective sleeve and the rear sleeve are more firmly combined together.

The snap joints, the positioning relation of which is 180 degrees, fasten the waterproof optical cable, the two snap joints fasten the waterproof optical cable in tandem, thus guaranteeing a certain pulling effect, and thus the waterproof optical cable can be fixed effectively.

In addition, when the optical fiber connector in the embodiment of the disclosure is not connected with the optical fiber adaptor, the dustproof cap can be connected with the coupling nut through the thread to play the role of dustproofing, waterproofing and the like.

The sealing ring arranged between the dustproof cap and the coupling nut can effectively guarantee the sealing property of the optical fiber connector.

Since the dustproof cap is connected with the coupling nut through the connecting part, the dustproof cap can be effectively prevented from being lost, and moreover, use becomes convenient.

## Claims

1. An optical fiber connector, comprising:
a guide protective sleeve (12), at least two snap joints (13), a heat-shrinkable bush (14), a coupling nut (15) and a sheath (16), wherein
the guide protective sleeve (12), comprising at least two through-hole openings for receiving the at least two snap joints (13), is sleeved on an optical fiber body (11) of the optical fiber connector, and is arranged to guide alignment between the optical fiber body (11) and an optical fiber adaptor, and protect a pin component (112) of the optical fiber body (11);
the at least two snap joints (13), arranged partly within the at least two through-hole openings of the guide protective sleeve (12) and partly between the guide protective sleeve (12) and an optical cable, are arranged to fix the optical cable connected with the optical fiber body (11);
the heat-shrinkable bush (14) wraps the at least two snap joints (13) and extends to a portion of the optical cable;
the coupling nut (15) is sleeved on the optical fiber body (11) connected with the guide protective sleeve (12), and is arranged to be connected with the optical fiber adaptor; and
the sheath (16) is sleeved on another region of the optical fiber connector not wrapped by the coupling nut (15), and extends to a portion of the heat-shrinkable bush (14);
wherein the guide protective sleeve (12) is connected with a rear sleeve (115) of the optical fiber body (11);
wherein an inner wall of the guide protective sleeve (12) is provided with a first positioning key (121) and a first positioning groove (122); correspondingly, an outer wall of the rear sleeve (115) is provided with a second positioning groove (1151) and a second positioning key (1152) at corresponding positions;
wherein the inner wall of the guide protective sleeve (12) is provided with a barb (125) through which the rear sleeve (115) is fixed.

2. The optical fiber connector according to claim 1, wherein the inner wall of the guide protective sleeve (12) is provided with a third positioning key (123) fastened with a positioning groove of the optical fiber adaptor and a third positioning groove (124) fastened with a positioning key of the optical fiber adaptor.

3. The optical fiber connector according to claim 1, wherein a number of the snap joint (13) is two, and a positional relation between the two snap joints is 180 degrees.

4. The optical fiber connector according to claim 1, further comprising: a dustproof cap (19) connected with the coupling nut (15); wherein the dustproof cap (19) is provided with an external thread.

5. The optical fiber connector according to claim 4, further comprising: a sealing ring (20) arranged between the dustproof cap (19) and the coupling nut (15).

6. The optical fiber connector according to claim 5, further comprising: a connecting part (21) connecting the dustproof cap (19) with the coupling nut (15).

7. The optical fiber connector according to claim 1, wherein the coupling nut (15) is internally provided with a thread, and is connected with the optical fiber adaptor by the thread.

## Patentansprüche

1. Lichtwellenleiter-Steckverbinder, umfassend:
eine Führungsschutzhülse (12), zumindest zwei Schnappverbindungen (13), eine wärmeschrumpfbare Buchse (14), eine Kupplungsmutter (15) und eine Hülle (16), worin
die Führungsschutzhülse (12), die zumindest zwei Durchgangslochöffnungen zur Aufnahme der zumindest zwei Schnappverbindungen (13) umfasst, an einem Lichtwellenleiterkörper (11) des Lichtwellenleiter-Steckverbinders aufgeschoben ist und dazu eingerichtet ist, eine Ausrichtung zwischen dem Lichtwellenleiterkörper (11) und einem Lichtwellenleiteradapter zu führen und eine Stiftkomponente (112) des Lichtwellenleiterkörpers (11) zu schützen;
die zumindest zwei Schnappverbindungen (13), die teilweise innerhalb der zumindest zwei Durchgangslochöffnungen der Führungsschutzhülse (12) und teilweise zwischen der Führungsschutzhülse (12) und einem Lichtwellenleiterkabel angeordnet sind, dazu eingerichtet sind, das Lichtwellenleiterkabel zu fixieren, das mit dem Lichtwellenleiterkörper (11) verbunden ist;
die wärmeschrumpfbare Buchse (14) die zumindest zwei Schnappverbindungen (13) umhüllt und sich bis zu einem Abschnitt des Lichtwellenleiterkabels erstreckt;
die Kupplungsmutter (15) an dem Lichtwellenleiterkörper (11) aufgeschoben ist, der mit der Führungsschutzhülse (12) verbunden ist, und dazu eingerichtet ist, mit dem Lichtwellenleiteradapter verbunden zu werden; und
die Hülle (16) an einem anderen Bereich des Lichtwellenleiter-Steckverbinders aufgeschoben ist, der von der Kupplungsmutter (15) nicht umhüllt ist und sich bis zu einem Abschnitt der wärmeschrumpfbaren Buchse (14) erstreckt;
worin die Führungsschutzhülse (12) mit einer Hinterhülse (115) des Lichtwellenleiterkörpers (11) verbunden ist;
worin eine Innenwand der Führungsschutzhülse (12) mit einem ersten Positionierungskeil (121) und einer ersten Positionierungsnut (122) versehen ist; dementsprechend eine Außenwand der Hinterhülse (115) mit einer zweiten Positionierungsnut (1151) und einem zweiten Positionierungskeil (1152) an entsprechenden Stellungen versehen ist;
worin die Innenwand der Führungsschutzhülse (12) mit einem Widerhaken (125) versehen ist, durch welchen die Hinterhülse (115) fixiert ist.

2. Lichtwellenleiter-Steckverbinder nach Anspruch 1, worin die Innenwand der Führungsschutzhülse (12) mit einem dritten Positionierungskeil (123), der mit einer Positionierungsnut des Lichtwellenleiteradapters befestigt ist, und einer dritten Positionierungsnut (124), die mit einem Positionierungskeil des Lichtwellenleiteradapters befestigt ist, versehen ist.

3. Lichtwellenleiter-Steckverbinder nach Anspruch 1, worin eine Anzahl von Schnappverbindungen (13) zwei ist und eine Lagebeziehung zwischen den zwei Schnappverbindungen 180 Grad ist.

4. Lichtwellenleiter-Steckverbinder nach Anspruch 1, ferner umfassend: eine staubdichte Kappe (19), die mit der Kupplungsmutter (15) verbunden ist; worin die staubdichte Kappe (19) mit einem Außengewinde versehen ist.

5. Lichtwellenleiter-Steckverbinder nach Anspruch 4, ferner umfassend: einen Dichtungsring (20), der zwischen der staubdichten Kappe (19) und der Kupplungsmutter (15) angeordnet ist.

6. Lichtwellenleiter-Steckverbinder nach Anspruch 5, ferner umfassend: einen Verbindungsteil (21), der die staubdichte Kappe (19) mit der Kupplungsmutter (15) verbindet.

7. Lichtwellenleiter-Steckverbinder nach Anspruch 1, worin die Kupplungsmutter (15) innen mit einem Gewinde versehen ist und mit dem Lichtwellenleiteradapter durch das Gewinde verbunden ist.

## Revendications

1. Connecteur de fibre optique, comprenant :
un manchon de protection de guidage (12), au moins deux joints à encliquetage (13), une douille thermorétractable (14), un écrou de couplage (15) et une gaine (16), où le manchon de protection de guidage (12), comprenant au moins deux ouvertures de trou traversant pour recevoir les au moins deux joints à encliquetage (13), est emmanché sur un corps de fibre optique (11) du connecteur de fibre optique, et est disposé pour guider l'alignement entre le corps de fibre optique (11) et un adaptateur de fibre optique, et
protéger un composant de broche (112) du corps de fibre optique (11) ;
les au moins deux joints à encliquetage (13), disposés en partie à l'intérieur des au moins deux ouvertures de trou traversant du manchon de protection de guidage (12) et en partie entre le manchon de protection de guidage (12) et un câble optique, sont disposés pour fixer le câble optique relié au corps de fibre optique (11) ;
la douille thermorétractable (14) enveloppe les au moins deux joints à encliquetage (13) et s'étend jusqu'à une partie du câble optique ;
l'écrou de couplage (15) est emmanché sur le corps de fibre optique (11) relié au manchon de protection de guidage (12), et est disposé pour être relié à l'adaptateur de fibre optique ; et
la gaine (16) est emmanchée sur une autre région du connecteur de fibre optique non enveloppée par l'écrou de couplage (15), et s'étend jusqu'à une partie de la douille thermorétractable (14) ;
où le manchon de protection de guidage (12) est relié à un manchon arrière (115) du corps de fibre optique (11) ;
où une paroi intérieure du manchon de protection de guidage (12) est pourvue d'un premier élément de positionnement (121) et d'une première rainure de positionnement (122) ; de manière correspondante, une paroi extérieure du manchon arrière (115) est pourvue d'une deuxième rainure de positionnement (1151) et d'un deuxième élément de positionnement (1152) à des positions correspondantes ;
où la paroi intérieure du manchon de protection de guidage (12) est pourvue d'une barbe (125) à travers laquelle le manchon arrière (115) est fixé.

2. Connecteur de fibre optique selon la revendication 1, où la paroi intérieure du manchon de protection de guidage (12) est pourvu d'un troisième élément de positionnement (123) fixé avec une rainure de positionnement de l'adaptateur de fibre optique et d'une troisième rainure de positionnement (124) fixée avec un élément de positionnement de l'adaptateur de fibre optique.

3. Connecteur de fibre optique selon la revendication 1, où un nombre du joint à encliquetage (13) est égal à deux, et une relation de position entre les deux joints à encliquetage est égale à 180 degrés.

4. Connecteur de fibre optique selon la revendication 1, comprenant en outre : un capuchon étanche à la poussière (19) relié à l'écrou de couplage (15) ; où le capuchon étanche à la poussière (19) est pourvu d'un filetage externe.

5. Connecteur de fibre optique selon la revendication 4, comprenant en outre : une bague d'étanchéité (20) disposée entre le capuchon étanche à la poussière (19) et l'écrou de couplage (15).

6. Connecteur de fibre optique selon la revendication 5, comprenant en outre : une partie de liaison (21) reliant le capuchon étanche à la poussière (19) à l'écrou de couplage (15).

7. Connecteur de fibre optique selon la revendication 1, où l'écrou de couplage (15) est pourvu intérieurement d'un filetage, et est relié à l'adaptateur de fibre optique par le filetage.
